# EUROPEAN PATENT APPLICATION

(11) **EP 4 407 185 A1**
(43) Date of publication of application: **31.07.2024**
(21) Application number: 22871815.1
(22) Date of filing: 08.09.2022
(51) Int. Cl.: F04C 28/00, F04C 29/00, F16F 15/10, F16F 15/28, F04C 18/16, G05D 19/02, F16F 15/02, F16F 7/10, F16C 29/04

(54) **VIBRATION FREQUENCY ADJUSTMENT SYSTEM**

(30) Priority: 26.09.2021 CN 202111128036
(71) Applicant: York (Wuxi) Air Conditioning And Refrigeration Co., Ltd., Wuxi, Jiangsu 214028 (CN); Tyco Fire & Security GmbH, 8212 Neuhausen am Rheinfall (CH)
(72) Inventor: TANG, Qinghua, Wuxi, Jiangsu 214028 (CN); LIN, Kun, Wuxi, Jiangsu 214028 (CN); MA, Xiaokui, Wuxi, Jiangsu 214028 (CN); ZHOU, Pu, Wuxi, Jiangsu 214028 (CN)
(74) Representative: Meissner Bolte Partnerschaft mbB
(86) International application number: PCT/CN2022/117739
(87) International publication number: WO 2023/045767

(57) **Abstract**

A vibration frequency adjustment system, comprising a vibratable component (102), at least one counterweight (401, 402), at least one drive device (407, 408), and a controller (307). The vibratable component (102) is configured to be connected to a vibration source (101). The vibration source (101) has an operating frequency range, and the vibratable component (102) has a natural vibration frequency. The at least one counterweight (401, 402) is configured to be movable along the vibratable component (102). The at least one drive device (407, 408) is configured to enable the at least one counterweight (401, 402) to be maintained at or moved to various counterweighting positions (421, 422, 423) on the vibratable component (102). The controller (307) is communicatively connected to the at least one drive device (407, 408). The vibration frequency adjustment system is used for a variable-frequency screw unit so as to reduce the vibration of an exhaust pipe.

## Description

### Technical Field

The present application relates to a vibration frequency adjustment system, and in particular to a vibration frequency adjustment system for a variable-frequency screw unit.

### Background Art

A variable-frequency screw compressor in the variable-frequency screw unit emits gases to an exhaust pipe at a certain frequency. When an operating frequency of the variable-frequency screw compressor is the same as or similar to a natural vibration frequency of the exhaust pipe, resonance is likely to occur. It is desired to perform vibration avoidance adjustment on the exhaust pipe to reduce effects of resonance.

### Summary of the Invention

The present application provides a vibration frequency adjustment system that is capable of adjusting a natural vibration frequency of an exhaust pipe so as to reduce the vibration of the exhaust pipe.

According to one aspect of the present application, the vibration frequency adjustment system of the present application comprises a vibratable component, at least one counterweight, at least one drive device, and a controller. The vibratable component is configured to be connected to a vibration source, the vibration source has an operating frequency range, and the vibratable component has a natural vibration frequency. The at least one counterweight is configured to be movable along the vibratable component. The at least one drive device is configured to enable the at least one counterweight to be maintained at or moved to various counterweighting positions on the vibratable component. The controller is communicatively connected to the at least one drive device.

As for the vibration frequency adjustment system as mentioned above, when the vibratable component vibrates, the vibratable component has at least one maximum vibration displacement position thereon. The controller is configured to be capable of controlling the at least one drive device, when the vibratable component vibrates, to enable the at least one counterweight to be maintained at or moved to a position deviating from the at least one maximum vibration displacement position on the vibratable component.

As for the vibration frequency adjustment system as mentioned above, the controller is configured to be capable of, by controlling the at least one drive device, driving the at least one counterweight to switch between two corresponding preset counterweighting positions among the counterweighting positions.

As for the vibration frequency adjustment system as mentioned above, the controller is configured to be capable of, by controlling each of the at least one drive device, driving each of the at least one counterweight to switch between two corresponding preset counterweighting positions among the counterweighting positions, respectively.

As for the vibration frequency adjustment system as mentioned above, the vibratable component is capable of vibrating in a "C-shaped" vibration mode or an "S-shaped" vibration mode within the operating frequency range of the vibration source. The counterweighting positions comprise "C-shaped" vibration mode counterweighting positions and an "S-shaped" vibration mode counterweighting position. The controller is configured to be capable of controlling the at least one drive device according to the vibration mode of the vibratable component: when the vibratable component vibrates in the "C-shaped" vibration mode, the controller controls the at least one drive device to enable the at least one counterweight to be maintained at or moved to the "C-shaped" vibration mode counterweighting position; or when the vibratable component vibrates in the "S-shaped" vibration mode, the controller controls the at least one drive device to enable the at least one counterweight to be maintained at or moved to the "S-shaped" vibration mode counterweighting position.

As for the vibration frequency adjustment system as mentioned above, when the vibratable component vibrates in the "C-shaped" vibration mode, the vibratable component has one "C-shaped" vibration mode maximum vibration displacement position, and the "C-shaped" vibration mode counterweighting positions are separated by a certain distance from the "C-shaped" vibration mode maximum vibration displacement position. When the vibratable component vibrates in the "S-shaped" vibration mode, the vibratable component has one "S-shaped" vibration mode minimum vibration displacement position and two "S-shaped" vibration mode maximum vibration displacement positions, the two "S-shaped" vibration mode maximum vibration displacement positions are an "S-shaped" vibration mode first maximum vibration displacement position and an "S-shaped" vibration mode second maximum vibration displacement position, respectively, and the "S-shaped" vibration mode counterweighting position is separated by a certain distance from the two "S-shaped" vibration mode maximum vibration displacement positions.

As for the vibration frequency adjustment system as mentioned above, the "C-shaped" vibration mode counterweighting positions comprise a "C-shaped" vibration mode first counterweighting position and a "C-shaped" vibration mode second counterweighting position. The "C-shaped" vibration mode first counterweighting position is located on one side of the "C-shaped" vibration mode maximum vibration displacement position, and the "C-shaped" vibration mode second counterweighting position is located on the other side of the "C-shaped" vibration mode maximum vibration displacement position. The "S-shaped" vibration mode counterweighting position is located at the "S-shaped" vibration mode minimum vibration displacement position.

As for the vibration frequency adjustment system as mentioned above, the "C-shaped" vibration mode first counterweighting position is adjacent to the "S-shaped" vibration mode first maximum vibration displacement position; and the "C-shaped" vibration mode second counterweighting position is adjacent to the "S-shaped" vibration mode second maximum vibration displacement position.

As for the vibration frequency adjustment system as mentioned above, the at least one counterweight is configured to have a predetermined weight, and the predetermined weight of the at least one counterweight causes that: when the vibratable component vibrates in the "C-shaped" vibration mode, a vibration displacement of the vibratable component at the "C-shaped" vibration mode maximum vibration displacement position is less than a predetermined vibration displacement value; and when the vibratable component vibrates in the "S-shaped" vibration mode, vibration displacements of the vibratable component at the two "S-shaped" vibration mode maximum vibration displacement positions are both less than the predetermined vibration displacement value.

As for the vibration frequency adjustment system as mentioned above, the quantity of the at least one drive device is two, namely, a first drive device and a second drive device, respectively. The quantity of the at least one counterweight is two, namely, a first counterweight and a second counterweight, respectively. When the vibratable component vibrates in the "C-shaped" vibration mode, the first counterweight is maintained at or moved to the "C-shaped" vibration mode first counterweighting position, and the second counterweight is maintained at or moved to the "C-shaped" vibration mode second counterweighting position; or when the vibratable component vibrates in the "S-shaped" vibration mode, both the first counterweight and the second counterweight are maintained at or moved to the "S-shaped" vibration mode counterweighting position.

As for the vibration frequency adjustment system as mentioned above, the controller is configured to: store the natural vibration frequency of the vibratable component, the natural vibration frequency at least comprising a "C-shaped" vibration mode natural vibration frequency and an "S-shaped" vibration mode natural vibration frequency; obtain a current vibration frequency of the vibratable component; and compare the current vibration frequency of the vibratable component with the natural vibration frequency of the vibratable component. When the controller determines that a deviation between the current vibration frequency of the vibratable component and the "C-shaped" vibration mode natural vibration frequency of the vibratable component is less than a preset threshold, the controller determines that the vibratable component vibrates in the "C-shaped" vibration mode; or when the controller determines that a deviation between the current vibration frequency of the vibratable component and the "S-shaped" vibration mode natural vibration frequency of the vibratable component is less than a preset threshold, the controller determines that the vibratable component vibrates in the "S-shaped" vibration mode. A method for obtaining the current vibration frequency of the vibratable component comprises: (1) receiving, by the controller, a signal indicating the operating frequency of the vibration source from the vibration source, and taking the operating frequency of the vibration source as the current vibration frequency of the vibratable component; or (2) configuring the vibration frequency adjustment system to comprise a frequency detection device for detecting the current vibration frequency of the vibratable component, and receiving, by the controller, a signal indicating the current vibration frequency of the vibratable component from the frequency detection device.

As for the vibration frequency adjustment system as mentioned above, the vibration frequency adjustment system further comprises detection devices for detecting a vibration situation of the vibratable component, and the detection devices are communicatively connected to the controller. The detection devices comprise: first position detection devices, second position detection devices, and third position detection devices. The first position detection devices are arranged at a first detection position of the vibratable component to detect a vibration situation of the vibratable component at the first detection position, and the first detection position is located at the "C-shaped" vibration mode maximum vibration displacement position. The second position detection devices are arranged at a second detection position of the vibratable component to detect a vibration situation of the vibratable component at the second detection position, and the second detection position is located at the "S-shaped" vibration mode first maximum vibration displacement position. The third position detection devices are arranged at a third detection position of the vibratable component to detect a vibration situation of the vibratable component at the third detection position, and the third detection position is located at the "S-shaped" vibration mode second maximum vibration displacement position.

As for the vibration frequency adjustment system as mentioned above, the first position detection devices comprise a first direction first sensor and a second direction first sensor; the second position detection devices comprise a first direction second sensor and a second direction second sensor; and the third position detection devices comprise a first direction third sensor and a second direction third sensor. The controller is configured to: on the basis of a detection of the first direction first sensor of the first position detection devices, determine a vibration displacement Y1 of the vibratable component at the first detection position and in a first direction; on the basis of a detection of the second direction first sensor of the first position detection devices, determine a vibration displacement Z1 of the vibratable component at the first detection position and in a second direction; on the basis of a detection of the first direction second sensor of the second position detection devices, determine a vibration displacement Y2 of the vibratable component at the second detection position and in the first direction; on the basis of a detection of the second direction second sensor of the second position detection devices, determine a vibration displacement Z2 of the vibratable component at the second detection position and in the second direction; on the basis of a detection of the first direction third sensor of the third position detection devices, determine a vibration displacement Y3 of the vibratable component at the third detection position and in the first direction; and on the basis of the a detection of the second direction third sensor of the third position detection devices, determine a vibration displacement Z3 of the vibratable component at the third detection position and in the second direction.

As for the vibration frequency adjustment system as mentioned above, when the controller determines that Z2<Y2, Z1<Y1, Z3<Y3, both Y2 and Y3 are less than a predetermined vibration displacement value, and Y1 is greater than the predetermined vibration displacement value, the controller determines that the vibratable component vibrates in the "C-shaped" vibration mode. Or, when the controller determines that: (i) Y2<Z2, Y1<Z1, Y3<Z3, Z1<Z2, Z1<Z3, and both Z2 and Z3 are greater than the predetermined vibration displacement value, or (ii) Y2>Z2, Y1>Z1, Y3>Z3, Y1<Y2, Y1<Y3, and both Y2 and Y3 are greater than the predetermined vibration displacement value, the controller determines that the vibratable component vibrates in the "S-shaped" vibration mode.

As for the vibration frequency adjustment system as mentioned above, the detection devices are one-way displacement sensors or one-way acceleration sensors.

As for the vibration frequency adjustment system as mentioned above, the at least one counterweight is of an annular structure, an inner side of the annular structure is provided with rolling devices, the rolling devices are rollers or balls, and the rolling devices are capable of rolling on a surface of the vibratable component.

The vibration frequency adjustment system as mentioned above is characterized in that the annular structure is an eccentric ring.

The vibration frequency adjustment system as mentioned above is characterized in that the inner side of the annular structure is provided with three rolling devices that are uniformly distributed.

As for the vibration frequency adjustment system as mentioned above, the at least one drive device is a pneumatic or hydraulic actuating element, the at least one drive device comprises a cylinder body and a push rod, one end of the push rod is fixed in the cylinder body in a retractable manner, and the other end of the push rod is connected to the corresponding one of the at least one counterweight.

As for the vibration frequency adjustment system as mentioned above, the vibration source is a variable-frequency screw compressor, and the vibratable component is an exhaust pipe connected to an exhaust port of the variable-frequency screw compressor.

### Brief Description of the Drawings

Figure 1 is a schematic structural perspective view of an embodiment of a variable-frequency screw unit according to the prior art.
Figure 2A to Figure 2C show vibration modes corresponding to different natural vibration frequencies of an exhaust pipe obtained by testing according to the present application.
Figure 3 shows a structural schematic diagram of an implementation for determining in which vibration mode the exhaust pipe is vibrating according to the present application.
Figure 4A to Figure 4C are structural schematic diagrams of an implementation of a counterweight arrangement according to the present application.
Figure 5A to Figure 5B are structural schematic diagrams of another implementation of a counterweight arrangement according to the present application.
Figure 6 is a block diagram of a controller according to the present application.

### Detailed Description of Embodiments

Various specific implementations of the present application will be described below with reference to the accompanying drawings, which constitute a part of the specification. It should be understood that, where possible, the same or similar reference numbers used in the present application refer to the same parts.

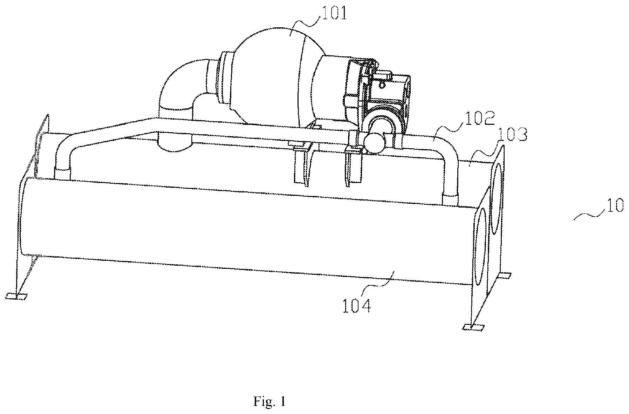

Figure 1 is a schematic structural perspective view of a variable-frequency screw unit 10 according to the prior art. As shown in Figure 1, the variable-frequency screw unit 10 comprises a variable-frequency screw compressor 101, an exhaust pipe 102, an evaporator 103, and a condenser 104. A gas inlet of the variable-frequency screw compressor 101 is connected to a gas outlet of the evaporator 103. A gas inlet of the exhaust pipe 102 is connected to an exhaust port of the variable-frequency screw compressor 101, and a gas outlet of the exhaust pipe 102 is connected to the condenser 104. Therefore, the variable-frequency screw compressor 101 can compress a gaseous refrigerant from the evaporator 103 and then convey the compressed gaseous refrigerant to the condenser 104 through the exhaust pipe 102. The variable-frequency screw compressor 101 conveys the compressed gaseous refrigerant to the exhaust pipe 102 at an exhaust gas pulsation frequency within a certain range. When the exhaust gas pulsation frequency of the variable-frequency screw compressor 101 reaches or approaches a natural vibration frequency of the exhaust pipe 102, the exhaust pipe 102 resonates. When the exhaust pipe 102 resonates, both the amplitude and stress-strain of the exhaust pipe 102 are very large, which will shorten the service life of the exhaust pipe 102. Moreover, since vibration of the exhaust pipe 102 will drive vibration of the variable-frequency screw compressor 101, the evaporator 103, the condenser 104, and the parts arranged on these devices, excessive vibration of the exhaust pipe 102 will also affect the normal operation of the variable-frequency screw unit 10. In addition, the excessive vibration generated when the exhaust pipe 102 resonates may also cause the noise problem.

As will be discussed in detail below, the present application arranges a counterweight at a selected counterweighting position on the exhaust pipe 102. In order to prevent the counterweight from being damaged or separated from the exhaust pipe 102 when the exhaust pipe 102 vibrates, the counterweighting position selected in the present application is separated by a certain distance from a maximum vibration displacement position of the exhaust pipe 102. Furthermore, the present application controls the counterweight to be at different counterweighting positions on the exhaust pipe 102 according to a current vibration situation of the exhaust pipe 102, so that a mass distribution and stiffness of the exhaust pipe 102 can be maintained or changed as needed. Therefore, the present application can maintain or change the natural vibration frequency of the exhaust pipe 102 based on actual needs according to the current vibration situation of the exhaust pipe 102, so as to ensure that a difference between the exhaust gas pulsation frequency of the variable-frequency screw compressor 101 and the natural vibration frequency of the exhaust pipe 102 is large enough, so that the vibration of the exhaust pipe 102 is small enough to have no adverse effects on the operation of the exhaust pipe 102 and the variable-frequency screw unit 10. As will be discussed below, the present application can determine in which vibration mode the exhaust pipe 102 is vibrating when the variable-frequency screw compressor 101 emits gases to the exhaust pipe 102, and based on this, enable the counterweight to be maintained at or moved to a corresponding counterweighting position on the exhaust pipe 102.

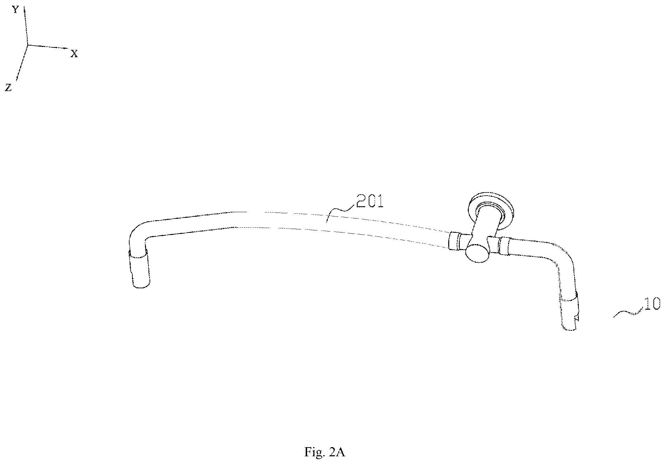

A variety of approaches can be used to determine in which vibration mode the exhaust pipe 102 is vibrating. An exemplary implementation for determining in which vibration mode the exhaust pipe 102 is vibrating is discussed in detail with reference to Figure 2A to Figure 3. In this implementation, the exhaust pipe 102 is tested in advance to obtain the corresponding vibration mode of this type of the exhaust pipe 102 at the natural vibration frequency. Subsequently, during the operation of the variable-frequency screw unit 10, when the variable-frequency screw compressor 101 emits gases to the exhaust pipe 102, vibration displacement situations at multiple positions when the exhaust pipe 102 vibrates are detected in real time to determine in which vibration mode the exhaust pipe 102 is vibrating.

Simulation analysis (for example, according to China's national standard GB/T33582-2017 "General Principles of Structural Finite Element Analysis for Mechanical Products") may be used to test in advance and to obtain the corresponding vibration mode of the exhaust pipe 102 at the natural vibration frequency. In one embodiment of the variable-frequency screw compressor 101, the exhaust gas pulsation frequency of the variable-frequency screw compressor 101 is in a range from 80 Hz to 250 Hz. By means of tests, the inventor of the present application has found that the exhaust pipe 102 has three natural vibration frequencies within the frequency range from 80 Hz to 250 Hz. When an actual vibration frequency of the exhaust pipe 102 reaches or approaches these three natural vibration frequencies, the exhaust pipe 102 vibrates in three corresponding vibration modes, respectively. Figure 2A to Figure 2C schematically show these three vibration modes of the exhaust pipe 102.

Figure 2A shows a "C-shaped" vibration mode of the exhaust pipe 102. In the "C-shaped" vibration mode shown in Figure 2A, the exhaust pipe 102 undergoes a "C-shaped" vibration in a Y-axis direction (a height direction of the exhaust pipe 102), and has a "C-shaped" vibration mode maximum vibration displacement at a position 201.

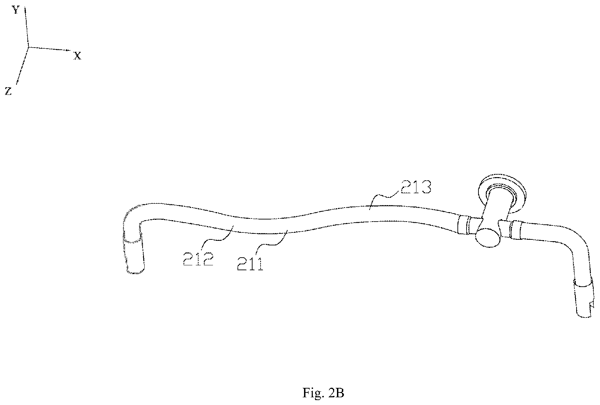

Figure 2B shows a first "S-shaped" vibration mode of the exhaust pipe 102. In the first "S-shaped" vibration mode shown in Figure 2B, the exhaust pipe 102 undergoes an "S-shaped" vibration in a Z-axis direction (a direction perpendicular to both the length and the height of the exhaust pipe 102), has first "S-shaped" vibration mode maximum vibration displacements at positions 212 and 213, and has a first "S-shaped" vibration mode minimum vibration displacement at a position 211.

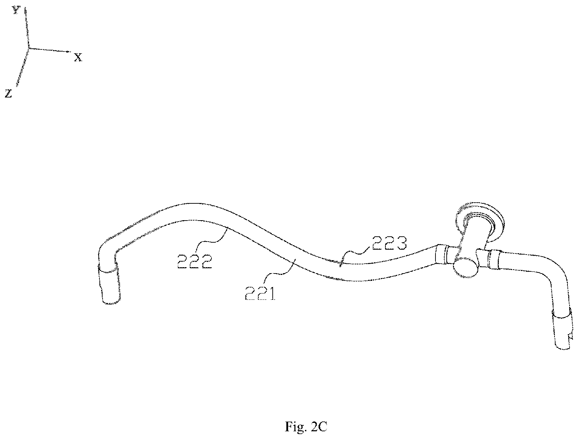

Figure 2C shows a second "S-shaped" vibration mode of the exhaust pipe 102. In the second "S-shaped" vibration mode shown in Figure 2C, the exhaust pipe 102 undergoes an "S-shaped" vibration in the Y-axis direction (the height direction of the pipe), has second "S-shaped" vibration mode maximum vibration displacements at positions 222 and 223, and has a second "S-shaped" vibration mode minimum vibration displacement at a position 221.

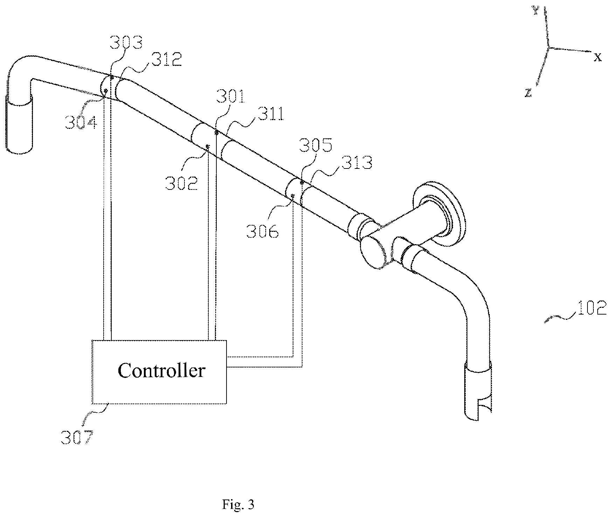

The "C-shaped" vibration mode maximum vibration displacement position 201, the first "S-shaped" vibration mode minimum vibration displacement position 211, and the second "S-shaped" vibration mode minimum vibration displacement position 221 of the exhaust pipe 102 roughly coincide; the first "S-shaped" vibration mode minimum vibration displacement position 211 and the second "S-shaped" vibration mode minimum vibration displacement position 221 of the exhaust pipe 102 roughly coincide; a first "S-shaped" vibration mode maximum vibration displacement position 212 and a second "S-shaped" vibration mode maximum vibration displacement position 222 of the exhaust pipe 102 roughly coincide; and a first "S-shaped" vibration mode maximum vibration displacement position 213 and a second "S-shaped" vibration mode maximum vibration displacement position 223 roughly coincide. Detection results of the vibration mode of the exhaust pipe 102 are stored in a controller (shown in Figure 3).

Figure 3 shows a structural schematic diagram of an implementation for determining in which vibration mode the exhaust pipe 102 is vibrating in real time during the process in which the variable-frequency screw compressor 101 emits gases to the exhaust pipe 102. In this implementation, the vibration displacement situations of the exhaust pipe 102 at different positions are detected to determine in which vibration mode the exhaust pipe 102 is vibrating. As shown in Figure 3, three detection positions 311, 312, and 313 are arranged on the exhaust pipe 102. The first detection position 311 is arranged at the "C-shaped" vibration mode maximum vibration displacement position 201, the second detection position 312 is arranged at the first "S-shaped" vibration mode maximum vibration displacement position 212 (that is, the second "S-shaped" vibration mode maximum vibration displacement position 222), and the third detection position 313 is arranged at the first "S-shaped" vibration mode maximum vibration displacement position 213 (that is, the second "S-shaped" vibration mode maximum vibration displacement position 223). First position detection devices comprise a first direction first sensor 301 and a second direction first sensor 302. The first direction first sensor 301 is used for detecting a vibration situation of the exhaust pipe 102 at the first detection position 311 and in the Y-axis direction. The second direction first sensor 302 is used for detecting a vibration situation of the exhaust pipe 102 at the first detection position 311 and in the Z-axis direction. Second position detection devices are arranged at the second detection position 312. The second position detection devices comprise a first direction second sensor 303 and a second direction second sensor 304. The first direction second sensor 303 is used for detecting a vibration situation of the exhaust pipe 102 at the second detection position 312 and in the Y-axis direction. The second direction second sensor 304 is used for detecting a vibration situation of the exhaust pipe 102 at the second detection position 312 and in the Z-axis direction. Third position detection devices are arranged at the third detection position 313. The third position detection devices comprise a first direction third sensor 305 and a second direction third sensor 306. The first direction third sensor 305 is used for detecting a vibration situation of the exhaust pipe 102 at the third detection position 313 and in the Y-axis direction. The second direction third sensor 306 is used for detecting a vibration situation of the exhaust pipe 102 at the third detection position 313 and in the Z-axis direction.

As shown in Figure 3, the variable-frequency screw unit 10 further comprises a controller 307. The controller 307 is communicatively connected to the sensors 301, 302, 303, 304, 305, and 306, so as to receive signals indicating the vibration situations of the exhaust pipe 102 at the corresponding detection positions from the sensors 301, 302, 303, 304, 305, and 306. The controller 307 determines the vibration displacements of the exhaust pipe 102 at the three detection positions 311, 312, and 313 according to the received signals indicating the vibration situations of the exhaust pipe 102 at these positions, and thus determines in which vibration mode the exhaust pipe 102 is vibrating. Specifically, the controller 307 determines a vibration displacement Y1 of the exhaust pipe 102 at the first detection position 311 in the Y-axis direction on the basis of the signal received from the first direction first sensor 301, determines a vibration displacement Z1 of the exhaust pipe 102 at the first detection position 311 in the Z-axis direction on the basis of the signal received from the second direction first sensor 302, determines a vibration displacement Y2 of the exhaust pipe 102 at the second detection position 312 in the Y-axis direction on the basis of the signal received from the first direction second sensor 303, determines a vibration displacement Z2 of the exhaust pipe 102 at the second detection position 312 in the Z-axis direction on the basis of the signal received from the second direction second sensor 304, determines a vibration displacement Y3 of the exhaust pipe 102 at the third detection position 313 in the Y-axis direction on the basis of the signal received from the first direction third sensor 305, and determines a vibration displacement Z3 of the exhaust pipe 102 at the third detection position 313 in the Z-axis direction on the basis of the signal received from the second direction third sensor 306. The controller 307 then compares the vibration displacements of the exhaust pipe 102 at the three detection positions 311, 312, and 313 to determine in which vibration mode the exhaust pipe 102 is vibrating. When the controller 307 determines that Z2<Y2, Z1<Y1, Z3<Y3, both Y2 and Y3 are less than a predetermined vibration displacement value, and Y1 is greater than the predetermined vibration displacement value, the controller 307 determines that the exhaust pipe 102 is vibrating in the "C-shaped" vibration mode. When the controller 307 determines that Y2<Z2, Y1<Z1, Y3<Z3, Z1<Z2, Z1<Z3, and both Z2 and Z3 are greater than the predetermined vibration displacement value, the controller 307 determines that the exhaust pipe 102 is vibrating in the first "S-shaped" vibration mode. When the controller 307 determines that Y2>Z2, Y1>Z1, Y3>Z3, Y1<Y2, Y1<Y3, and both Y2 and Y3 are greater than the predetermined vibration displacement value, the controller 307 determines that the exhaust pipe 102 is vibrating in the second "S-shaped" vibration mode. The predetermined vibration displacement value is set such that when the vibration displacement does not exceed this numerical value, no damage will be caused to the exhaust pipe 102 and the variable-frequency screw unit 10. In one embodiment, the predetermined vibration displacement value is set to be 60 µm.

The sensors 301, 302, 303, 304, 305, 306 may all be one-way acceleration sensors, and are used for detecting motion accelerations of the exhaust pipe 102 at each detection position in the y-axis direction and the Z-axis direction, and sending signals indicating the detected motion accelerations to the controller 307. The controller 307 is capable of calculating to obtain the vibration displacement of the exhaust pipe 102 at each detection position based on acceleration signals from these one-way acceleration sensors. The sensors 301, 302, 303, 304, 305, 306 may also be all one-way displacement sensors, and are used for detecting vibration displacements of the exhaust pipe 102 at each detection position in the y-axis direction and the Z-axis direction, and sending signals indicating the detected vibration displacements to the controller 307.

In addition to the above implementation of determining in which vibration mode the exhaust pipe 102 is vibrating by comparing the vibration displacement of the exhaust pipe 102 at the maximum vibration displacement position of each vibration mode, in other implementations, its current vibration mode may also be determined by determining a current vibration frequency of the exhaust pipe 102 when vibration occurs, and comparing the current vibration frequency of the exhaust pipe 102 with its natural vibration frequency.

In this implementation, the exhaust pipe 102 that has been installed in a specific variable-frequency screw unit 10 may be tested in advance using a test modal method to determine its natural vibration frequency and its corresponding vibration mode. Through this test method, it can be found that when the exhaust gas pulsation frequency of the variable-frequency screw compressor 101 is in the range from 80 Hz to 250 Hz, the exhaust pipe 102 also has three natural vibration frequencies and three corresponding vibration modes as shown in Figure 2A to Figure 2C. Test results are stored in the controller 307.

Afterwards, during the operation process of the variable-frequency screw unit 10, the controller 307 determines in real time the current vibration frequency of the exhaust pipe 102 when the vibration occurs. For example, the controller 307 may receive a signal indicating the exhaust gas pulsation frequency of the variable-frequency screw compressor 101 from the variable-frequency screw compressor 101 and take the exhaust gas pulsation frequency of the variable-frequency screw compressor 101 as the current vibration frequency of the exhaust pipe 102. For another example, the controller 307 may also receive a signal indicating the vibration situation of the exhaust pipe 102 from a frequency detection device of the exhaust pipe 102, and perform spectrum analysis based on the signal to determine the current vibration frequency of the exhaust pipe 102. In an example of receiving the signal indicating the vibration situation of the exhaust pipe 102 from the frequency detection device of the exhaust pipe 102, the frequency detection device may be six one-way acceleration sensors or one-way displacement sensors as arranged in Figure 3, or may be three three-way acceleration sensors or three-way displacement sensors arranged on any three positions of the exhaust pipe 102.

In the implementation in which the controller 307 determines its current vibration mode by determining the current vibration frequency of the exhaust pipe 102, when a difference value between the current vibration frequency of the exhaust pipe 102 and a "C-shaped" natural vibration frequency corresponding to the "C-shaped" vibration mode of the exhaust pipe 102 is less than a preset value, the controller 307 determines that the exhaust pipe 102 is vibrating in the "C-shaped" vibration mode. When a difference value between the current vibration frequency of the exhaust pipe 102 and a first "S-shaped" natural vibration frequency corresponding to the first "S-shaped" vibration mode of the exhaust pipe 102 is less than a preset value, the controller 307 determines that the exhaust pipe 102 is vibrating in the first "S-shaped" vibration mode. When a difference value between the current vibration frequency of the exhaust pipe 102 and a second "S-shaped" natural vibration frequency corresponding to the second "S-shaped" vibration mode of the exhaust pipe 102 is less than a preset value, the controller 307 determines that the exhaust pipe 102 is vibrating in the second "S-shaped" vibration mode. The preset value of the difference value between the current vibration frequency of the exhaust pipe 102 and each natural vibration frequency may be 4 Hz.

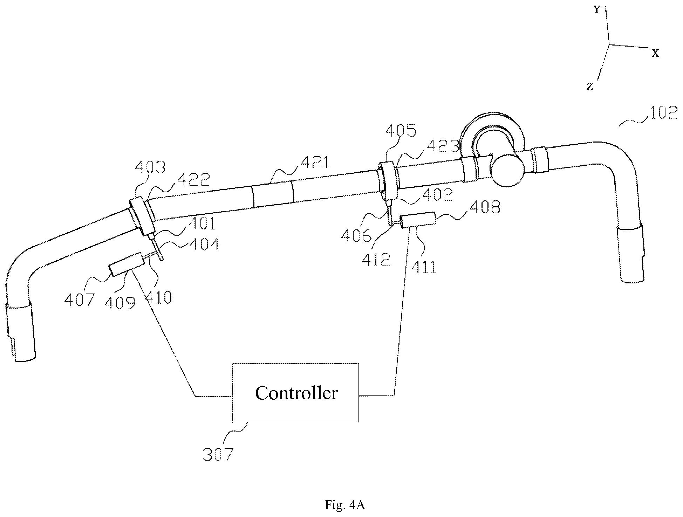

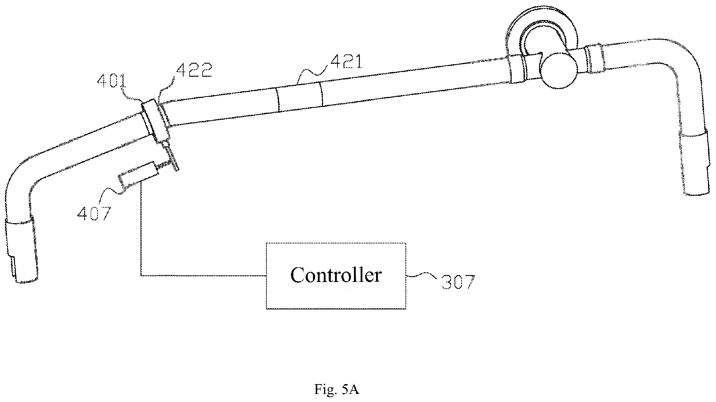

After the controller 307 determines in which vibration mode the exhaust pipe 102 is vibrating, the controller 307 maintains or adjusts the position of the counterweight to maintain or change the natural vibration frequency of the exhaust pipe 102, so as to ensure that a difference between the natural vibration frequency of the exhaust pipe 102 and the exhaust gas pulsation frequency of the variable-frequency screw compressor 101 is large enough, thereby enabling the vibration of the exhaust pipe 102 to be small enough to prevent damage to the exhaust pipe 102 and the variable-frequency screw unit 10. Maintaining or adjusting the position of the counterweight is illustrated with reference to the different implementations of counterweight arrangement shown in Figure 4A to Figure 4C and Figure 5A to Figure 5B.

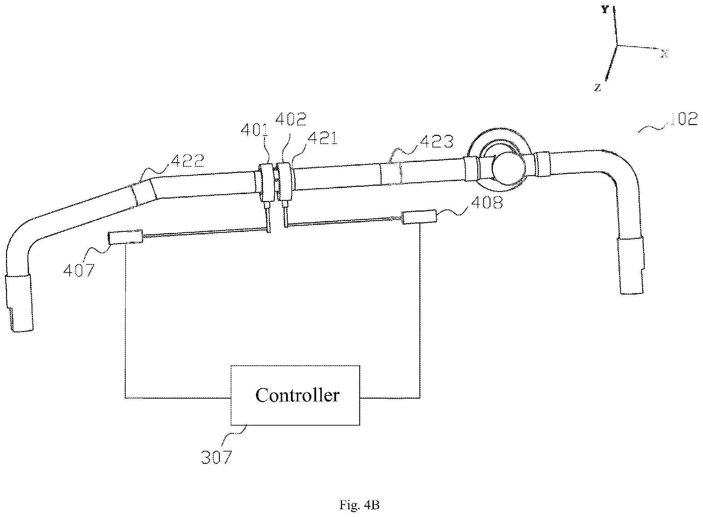

In the implementation shown in Figure 4A to Figure 4C, the exhaust pipe 102 is provided with two counterweights 401 and 402. The exhaust pipe 102 is further provided with two drive devices 407 and 408. The drive device 407 is connected to the counterweight 401 and is used for driving the counterweight 401, and the drive device 408 is connected to the counterweight 402 and is used for driving the counterweight 402. As shown in Figure 4A and Figure 4B, the drive device 407 and the drive device 408 are communicatively connected with the controller 307, respectively, so that the controller 307 may control the drive devices 407 and 408 to drive the counterweights 401 and 402. Also as shown in Figure 4A and Figure 4B, the exhaust pipe 102 is provided with three counterweighting positions 421, 422, 423. The controller 307 may control the drive device 407 to move the counterweight 401 to the counterweighting position 421 or 422, and the controller 307 may control the drive device 408 to move the counterweight 402 to the counterweighting position 421 or 423. The first counterweighting position 421 is arranged to be separated by a certain distance from the first "S-shaped" vibration mode maximum vibration displacement positions 212, 213 (i.e., the second "S-shaped" vibration mode maximum vibration displacement positions 222, 223) of the exhaust pipe 102. The second counterweighting position 422 is located on one side of the "C-shaped" vibration mode maximum vibration displacement position 201, and is separated by a certain distance from the "C-shaped" vibration mode maximum vibration displacement position 201. The third counterweighting position 423 is located on the other side of the "C-shaped" vibration mode maximum vibration displacement position 201, and is separated by a certain distance from the "C-shaped" vibration mode maximum vibration displacement position 201. In one embodiment, the first counterweighting position 421 is located at or adjacent to the first "S-shaped" vibration mode minimum vibration displacement position 211 (i.e., the second "S-shaped" vibration mode minimum vibration displacement position 221), the second counterweighting position 422 is located at or adjacent to the first "S-shaped" vibration mode maximum vibration displacement position 212 (i.e., the second "S-shaped" vibration mode maximum vibration displacement position 222), and the third counterweighting position 423 is located at or adjacent to the first "S-shaped" vibration mode maximum vibration displacement position 213 (i.e., the second "S-shaped" vibration mode maximum vibration displacement position 223).

When the controller 307 determines that the exhaust pipe 102 is vibrating in the "C-shaped" vibration mode, if the counterweights 401 and 402 are located at the first counterweighting position 421 at this time, the controller 307 controls the drive device 407 to move the counterweight 401 from the first counterweighting position 421 to the second counterweighting position 422, and controls the drive device 408 to move the counterweight 402 from the first counterweighting position 421 to the third counterweighting position 423; and if the counterweight 401 has already been located at the second counterweighting position 422 and the counterweight 402 has already been located at the third counterweighting position 423, the controller 307 controls the drive device 407 to maintain the first counterweight 401 at the second counterweighting position 422, and controls the drive device 408 to maintain the second counterweight 402 at the third counterweighting position 423. When the controller 307 determines that the exhaust pipe 102 is vibrating in the first "S-shaped" vibration mode or the second "S-shaped" vibration mode, if the counterweight 401 is located at the second counterweighting position 422 and the counterweight 402 is located at the third counterweighting position 423 at this time, the controller 307 controls the drive device 407 to move the first counterweight 401 to the first counterweighting position 421, and controls the drive device 408 to also move the second counterweight 402 to the first counterweighting position 421; and if the counterweights 401 and 402 have already been located at the first counterweighting position 421 at this time, the controller 307 controls the drive device 407 to maintain the first counterweight 401 at the first counterweighting position 421, and controls the drive device 408 to also maintain the second counterweight 402 at the first counterweighting position 421.

The counterweights 401, 402 are configured to have a predetermined weight. The predetermined weight causes that when the exhaust pipe 102 vibrates in the "C-shaped" vibration mode, in a case that the counterweights 401, 402 are located at the corresponding counterweighting positions 422 and 423 of the "C-shaped" vibration mode, the difference between the natural vibration frequency of the exhaust pipe 102 and the exhaust gas pulsation frequency of the variable-frequency screw unit 10 reaches a predetermined frequency difference; and when the exhaust pipe 102 vibrates in the first "S-shaped" vibration mode or the second "S-shaped" vibration mode, and when the counterweights 401, 402 are located at the corresponding counterweighting position 421 of the first "S-shaped" vibration mode or the second "S-shaped" vibration mode, the difference between the natural vibration frequency of the exhaust pipe 102 and the exhaust gas pulsation frequency of the variable-frequency screw unit 10 also reaches the predetermined frequency difference. Therefore, when the exhaust pipe 102 vibrates in the "C-shaped" vibration mode, the vibration displacement of the exhaust pipe 102 at the "C-shaped" vibration mode maximum vibration displacement position 201 is capable of being less than the predetermined vibration displacement value; and when the exhaust pipe 102 vibrates in the first "S-shaped" vibration mode or the second "S-shaped" vibration mode, the vibration displacement of the exhaust pipe 102 at the first "S-shaped" vibration mode maximum vibration displacement positions 212, 213 or the second "S-shaped" vibration mode maximum vibration displacement positions 222, 223 is also capable of being less than the predetermined vibration displacement value, so that the vibration of the exhaust pipe 102 will not damage the exhaust pipe 102 and the variable-frequency screw unit 10. In one embodiment, the predetermined vibration displacement value is 60 µm, and the predetermined frequency difference is 10 Hz to 15 Hz. In order to implement the predetermined frequency difference, the counterweights 401, 402 may be configured to have a weight of 3 kg, respectively.

The present application enables the mass distribution and stiffness of the exhaust pipe 102 to be maintained or changed according to needs by arranging the counterweights on the exhaust pipe 102 and controlling the counterweights to be located at the different counterweighting positions on the exhaust pipe 102 according to the current vibration situation of the exhaust pipe 102. Therefore, the present application can maintain or change the natural vibration frequency of the exhaust pipe 102 according to actual needs in accordance with the current vibration situation of the exhaust pipe 102, and ensure that the difference between the exhaust gas pulsation frequency of the variable-frequency screw compressor 101 and the natural vibration frequency of the exhaust pipe 102 is large enough, so that the vibration of the exhaust pipe 102 is small enough to not cause adverse effects on the running of the exhaust pipe 102 and the variable-frequency screw unit 10. Moreover, since the present application makes the counterweights arranged at positions a certain distance away from the maximum vibration displacement position under the current vibration mode, when the exhaust pipe 102 vibrates, the counterweights are not prone to being damaged and are not prone to being separated from the exhaust pipe 102. Therefore, the vibration frequency adjustment system of the present application can function consistently and effectively.

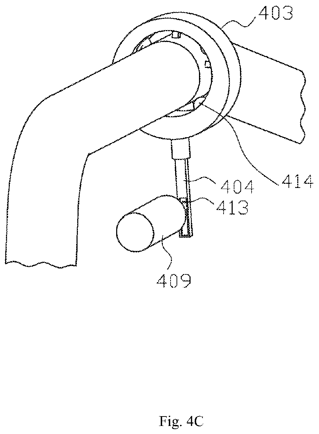

Figure 4A to Figure 4C show one embodiment of structures of the counterweights 401, 402 and the drive devices 407, 408. As shown in Figure 4A to Figure 4C, the counterweights 401 and 402 are of annular structures 403, 405. The inner sides of the annular structures 403, 405 are provided with rolling devices 414, so that the counterweights 401 and 402 can roll on a surface of the exhaust pipe 102. The rolling devices 414 may be rollers or balls. In one embodiment of the counterweights, the inner sides of the annular structures 403, 405 are provided with three uniformly distributed rolling devices 414, so that the counterweights can roll on the exhaust pipe 102 more smoothly and continuously. As one example, as shown in Figure 4C, the annular structures 403, 405 may be eccentric rings. The use of the annular structures 403, 405 in the form of eccentric rings is beneficial to maintaining the counterweights 401, 402 on the exhaust pipe 102 in a constant posture, thereby facilitating the maintenance of the relative positions with the drive devices 407, 408, and further enabling the counterweights 401, 402 to maintain smooth and continuous rolling on the exhaust pipe 102. As shown in Figure 4A to Figure 4C, the counterweight 401 may further include a guide rod 404 connected to the annular structure 403 for being combined with the drive device 407. Similarly, the counterweight 402 may further include a guide rod 406 connected to the annular structure 405 for being combined with the drive device 408.

In the embodiment shown in Figure 4A to Figure 4C, the drive devices 407 and 408 are hydraulic or pneumatic actuating elements. The drive device 407 includes a cylinder body 409 and a push rod 410. Similarly, the drive device 408 includes a cylinder body 411 and a push rod 412. One end of the push rod 410 of the drive device 407 is fixed in the cylinder body 409 in a retractable manner, and the other end is combined with the guide rod 404 of the counterweight 401, thereby being capable of driving the counterweight 401. One end of the push rod 412 of the drive device 408 is fixed in the cylinder body 411 in a retractable manner, and the other end is combined with the guide rod 406 of the counterweight 402, thereby being capable of driving the counterweight 402.

As shown in Figure 4A and Figure 4B, at least a part of the exhaust pipe 102 may be configured to slant along its length direction. In order to make the drive devices 407, 408 to be capable of driving the counterweights 401, 402 to move on the exhaust pipe 102 that slants along the length direction, it is hoped that the push rods 410, 412 of the drive devices 407, 408 are capable of moving up and down along a height direction of the guide rods 404, 406 of the counterweights 401, 402. Figure 4C further shows an enlarged view of structures of the push rod 410 of the drive device 407 and the guide rod 404 of the counterweight 401, and the shown structures enable the implementation of this movement. As shown in Figure 4C, the guide rod 404 of the counterweight 401 is provided with a guide rail groove 413, one end of the push rod 410 of the drive device 407 that is not fixed in the cylinder body 409 is engaged in the guide rail groove 413 of the guide rod 404, and the push rod 410 and the guide rod 404 are substantially vertical; and the drive device 407 is arranged to be capable of rotating in a plane defined by the push rod 410 and the guide rod 404. This structural arrangement of the counterweight 401 and the drive device 407 causes that when the counterweight 401 slantly moves downward along the exhaust pipe 102, the push rod 410 of the drive device 407 moves upward in the guide rail groove 413 along the height of the guide rail groove 413; and when the counterweight 401 slantly moves upward along the exhaust pipe 102, the push rod 410 of the drive device 407 moves downward in the guide rail groove 413 along the height of the guide rail groove 413. Therefore, when the counterweight 401 slantly moves downward or upward along the exhaust pipe 102, the drive device 407 is capable of maintaining the driving for the counterweight 401. Although Figure 4C only shows the connection between the guide rod 404 of the counterweight 401 and the push rod 410 of the drive device 407, it should be understood that the counterweight 402 and its drive device 408 may also be connected in a similar manner according to needs. It should also be understood that if the exhaust pipe 102 is straight and has no slant in its entire length direction, the push rods 410, 412 of the drive devices 407, 408 need not be configured to move along the height direction of the guide rods 404, 406 of the counterweights 401, 402, so that the push rods 410, 412 of the drive devices 407, 408 and the guide rods 404, 406 of the counterweights 401, 402 may also be designed to have different configurations.

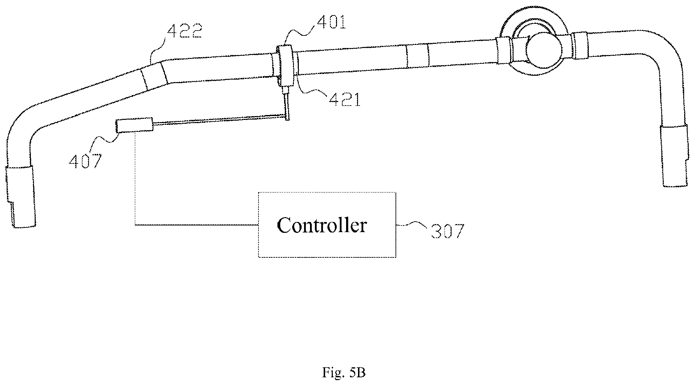

Figure 5A to Figure 5B are alternative embodiments of the counterweight arrangement shown in Figure 4A to Figure 4B. The embodiments of Figure 5A and Figure 5B are similar to the implementations of Figure 4A to Figure 4B, and the only difference lies in that only one counterweight 401 is used in the implementations of Figure 5A to Figure 5B. After the controller 307 determines in which vibration mode the exhaust pipe 102 is vibrating, the controller 307 controls the drive device 407, so that the counterweight 401 is maintained at or moved to the "S-shaped" vibration mode counterweighting position 421 or the "C-shaped" vibration mode first counterweighting position 422. In the embodiment in which only one counterweight is arranged, the counterweight 401 may, for example, be configured to have a weight of 6 kg.

Although the present application only shows the structures of the counterweights 401, 402 and the drive devices 407, 408 as shown in Figure 4A to Figure 5B, it should be understood that any other structures that are capable of implementing the movement of the counterweights by the drive devices are suitable for the present application, and fall within the spirit of the present application. As one example, a traction mechanism formed by a combination of a motor, a traction rope, and a fixed pulley may serve as a drive device to implement the movement of the counterweight. By causing the traction rope to pass through the fixed pulley, the traction rope may do circular motion under the driving of the motor. The counterweight may be connected to the traction rope, so that the counterweight moves along with the circular motion of the traction rope during the process that the motor drives the traction rope to do circular motion. When the controller controls the motor to rotate in a first direction, the traction rope does circular motion in the first direction, so that the motor moves to one counterweighting position along with the motion of the traction rope. When the controller controls the motor to rotate in a second direction, the traction rope does circular motion in the second direction, so that the motor moves to another counterweighting position along with the motion of the traction rope. A limiter may be arranged at the counterweighting position, so that the controller is capable of determining that the counterweight has moved to the counterweighting position, thereby controlling the motor to stop rotating. In embodiments using this drive device, the counterweight may be configured to include only the annular structures shown in Figure 4A to Figure 5B without including the guide rods connected to the annular structures.

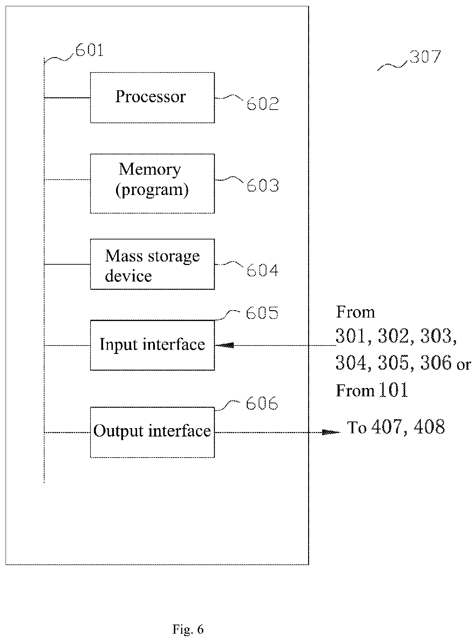

Figure 6 shows a schematic block diagram of the controller 307. As shown in Figure 6, the controller 307 includes a bus 601. A processor 602, a memory 603, a mass storage device 604, an input interface 605, and an output interface 606 are connected to the bus 601. The input interface and the output interface may be wireless control modules. The processor 602 may read a program (or instructions) from the memory 603 or the mass storage device 604, and execute the program (or instructions) to perform a control function on the drive devices 407, 408; and the processor 602 may further write data or instructions into the memory 603 or the mass storage device 604. The memory 603 and the mass storage device 604 may store the program (instructions) or the data. Typically, the memory 603 has an access speed faster than that of the mass storage device 604, and the mass storage device 604 has a memory size larger than that of the memory 603. By executing the instructions in the memory 603, the processor 602 may control the memory 603, the mass storage device 604, the input interface 605, and the output interface 606. The input interface 605 receives inputs from the variable-frequency screw compressor 101 or the sensors 301, 302, 303, 304, 305 and 306, and converts the received inputs into signals identifiable by the processor 602. The output interface 606 receives a control signal from the processor 602 and converts the control signal into outputs suitable for the drive devices 407, 408.

In operation, when an input is received from the variable-frequency screw compressor 101 or the sensors 301, 302, 303, 304, 305, and 306 through the input interface 605, the processor 602 performs the required functions in accordance with the received input. Also in operation, when a control signal is received from the processor 602, the output interface 606 converts the control signal into an output and uses the converted output to the drive devices 407, 408, so as to control the drive devices 407, 408 to maintain the counterweights 401, 402 at or move the counterweights to the appropriate counterweighting positions on the exhaust pipe 102.

The present application at least includes the following technical effects:
1. The vibration of the exhaust pipe is reduced, thereby reducing the noise during the using process of the variable-frequency screw unit;
2. The vibration of the exhaust pipe is reduced, thereby prolonging the service life of the exhaust pipe and ensuring the normal running of the variable-frequency screw unit; and
3. The counterweight is a certain distance away from the maximum vibration displacement position of the exhaust pipe, so that the counterweight is not prone to being damaged and is not prone to being separated from the exhaust pipe.

## Claims

1. A vibration frequency adjustment system, **characterized in that** the vibration frequency adjustment system comprises:
a vibratable component (102), the vibratable component (102) being configured to be connected to a vibration source (101), the vibration source (101) having an operating frequency range, and the vibratable component (102) having a natural vibration frequency;
at least one counterweight (401, 402), the at least one counterweight being configured to be movable along the vibratable component (102);
at least one drive device (407, 408), the at least one drive device being configured to enable the at least one counterweight (401, 402) to be maintained at or moved to various counterweighting positions (421, 422, 423) on the vibratable component (102); and
a controller (307), the controller (307) being communicatively connected to the at least one drive device (407, 408).

2. The vibration frequency adjustment system according to claim 1, **characterized in that**,
when the vibratable component (102) vibrates, the vibratable component (102) has at least one maximum vibration displacement position thereon; and
the controller (307) is configured to be capable of controlling the at least one drive device (407, 408), when the vibratable component (102) vibrates, to enable the at least one counterweight (401, 402) to be maintained at or moved to a position deviating from the at least one maximum vibration displacement position on the vibratable component (102).

3. The vibration frequency adjustment system according to claim 2, **characterized in that**
the controller (307) is configured to be capable of, by controlling the at least one drive device (407, 408), driving the at least one counterweight (401, 402) to switch between two corresponding preset counterweighting positions (421, 422, 423) of the counterweighting positions (421, 422, 423).

4. The vibration frequency adjustment system according to claim 3, **characterized in that**
the controller (307) is configured to be capable of, by controlling each drive device (407, 408) of the at least one drive device (407, 408), driving each counterweight (401, 402) of the at least one counterweight (401, 402) to switch between two corresponding preset counterweighting positions (421, 422, 423) of the counterweighting positions (421, 422, 423), respectively.

5. The vibration frequency adjustment system according to claim 3, **characterized in that**
the vibratable component (102) is capable of vibrating in a "C-shaped" vibration mode or an "S-shaped" vibration mode within the operating frequency range of the vibration source (101);
the counterweighting positions (421, 422, 423) comprise "C-shaped" vibration mode counterweighting positions (422, 423) and an "S-shaped" vibration mode counterweighting position (421); and
the controller (307) is configured to be capable of controlling the at least one drive device according to a vibration mode of the vibratable component (102):
when the vibratable component (102) vibrates in the "C-shaped" vibration mode, the controller (307) controls the at least one drive device (407, 408) to enable the at least one counterweight (401, 402) to be maintained at or moved to the "C-shaped" vibration mode counterweighting position (422, 423); or
when the vibratable component (102) vibrates in the "S-shaped" vibration mode, the controller (307) controls the at least one drive device (407, 408) to enable the at least one counterweight (401, 402) to be maintained at or moved to the "S-shaped" vibration mode counterweighting position (421).

6. The vibration frequency adjustment system according to claim 5, **characterized in that**,
when the vibratable component (102) vibrates in the "C-shaped" vibration mode, the vibratable component (102) has one "C-shaped" vibration mode maximum vibration displacement position (201), and the "C-shaped" vibration mode counterweighting positions (422,423) are separated by a certain distance from the "C-shaped" vibration mode maximum vibration displacement position (201); and
when the vibratable component (102) vibrates in the "S-shaped" vibration mode, the vibratable component (102) has one "S-shaped" vibration mode minimum vibration displacement position (211, 221) and two "S-shaped" vibration mode maximum vibration displacement positions (212, 213, 222, 223), the two "S-shaped" vibration mode maximum vibration displacement positions (212, 213, 222, 223) are an "S-shaped" vibration mode first maximum vibration displacement position (212, 222) and an "S-shaped" vibration mode second maximum vibration displacement position (213, 223), respectively, and the "S-shaped" vibration mode counterweighting position (421) is separated by a certain distance from the two "S-shaped" vibration mode maximum vibration displacement positions (212, 213, 222, 223).

7. The vibration frequency adjustment system according to claim 6, **characterized in that**
the "C-shaped" vibration mode counterweighting positions (422, 423) comprise a "C-shaped" vibration mode first counterweighting position (422) and a "C-shaped" vibration mode second counterweighting position (423);
the "C-shaped" vibration mode first counterweighting position (422) is located on one side of the "C-shaped" vibration mode maximum vibration displacement position (201), and
the "C-shaped" vibration mode second counterweighting position (423) is located on the other side of the "C-shaped" vibration mode maximum vibration displacement position (201); and
the "S-shaped" vibration mode counterweighting position (421) is located at the "S-shaped" vibration mode minimum vibration displacement position (211, 221).

8. The vibration frequency adjustment system according to claim 7, **characterized in that**
the "C-shaped" vibration mode first counterweighting position (422) is adjacent to the "S-shaped" vibration mode first maximum vibration displacement position (212, 222); and
the "C-shaped" vibration mode second counterweighting position (423) is adjacent to the "S-shaped" vibration mode second maximum vibration displacement position (213, 223).

9. The vibration frequency adjustment system according to claim 7, **characterized in that**
the at least one counterweight (401, 402) is configured to have a predetermined weight, and the predetermined weight of the at least one counterweight (401, 402) causes that:
when the vibratable component (102) vibrates in the "C-shaped" vibration mode, a vibration displacement of the vibratable component (102) at the "C-shaped" vibration mode maximum vibration displacement position (201) is less than a predetermined vibration displacement value; and
when the vibratable component (102) vibrates in the "S-shaped" vibration mode, vibration displacements of the vibratable component (102) at the two "S-shaped" vibration mode maximum vibration displacement positions (212, 213, 222, 223) are both less than the predetermined vibration displacement value.

10. The vibration frequency adjustment system according to claim 7, **characterized in that**
the quantity of the at least one drive device (407, 408) is two, namely, a first drive device (407) and a second drive device (408), respectively;
the quantity of the at least one counterweight (401, 402) is two, namely, a first counterweight (401) and a second counterweight (402), respectively;
when the vibratable component (102) vibrates in the "C-shaped" vibration mode, the first counterweight (401) is maintained at or moved to the "C-shaped" vibration mode first counterweighting position (422), and the second counterweight (402) is maintained at or moved to the "C-shaped" vibration mode second counterweighting position (423); or
when the vibratable component (102) vibrates in the "S-shaped" vibration mode, both the first counterweight (401) and the second counterweight (402) are maintained at or moved to the "S-shaped" vibration mode counterweighting position (421).

11. The vibration frequency adjustment system according to claim 5, **characterized in that**
the controller (307) is configured to:
store the natural vibration frequency of the vibratable component (102), the natural vibration frequency at least comprising a "C-shaped" vibration mode natural vibration frequency and an "S-shaped" vibration mode natural vibration frequency;
obtain a current vibration frequency of the vibratable component (102); and
compare the current vibration frequency of the vibratable component (102) with the natural vibration frequency of the vibratable component (102);
wherein:
when the controller (307) determines that a deviation between the current vibration frequency of the vibratable component (102) and the "C-shaped" vibration mode natural vibration frequency of the vibratable component (102) is less than a preset threshold, the controller (307) determines that the vibratable component (102) vibrates in the "C-shaped" vibration mode; or
when the controller (307) determines that a deviation between the current vibration frequency of the vibratable component (102) and the "S-shaped" vibration mode natural vibration frequency of the vibratable component (102) is less than a preset threshold, the controller (307) determines that the vibratable component (102) vibrates in the "S-shaped" vibration mode;
wherein a method for obtaining the current vibration frequency of the vibratable component (102) comprises:
(1) receiving, by the controller (307), a signal indicating the operating frequency of the vibration source (101) from the vibration source (101), and taking the operating frequency of the vibration source (101) as the current vibration frequency of the vibratable component (102); or
(2) configuring the vibration frequency adjustment system to comprise a frequency detection device for detecting the current vibration frequency of the vibratable component (101), and receiving, by the controller (307), a signal indicating the current vibration frequency of the vibratable component (101) from the frequency detection device.

12. The vibration frequency adjustment system according to claim 6, **characterized in that**
the vibration frequency adjustment system further comprises detection devices (301, 302, 333, 304, 305, 306) for detecting a vibration situation of the vibratable component (102), the detection devices (301, 302, 303, 304, 305, 306) are communicatively connected to the controller (307), and the detection devices (301, 302, 303, 304, 305, 306) comprise:
first position detection devices (301, 302), the first position detection devices (301, 302) being arranged at a first detection position (311) of the vibratable component (102) to detect a vibration situation of the vibratable component (102) at the first detection position (311), the first detection position (311) being located at the "C-shaped" vibration mode maximum vibration displacement position (201);
second position detection devices (303, 304), the second position detection devices (303, 304) being arranged at a second detection position (312) of the vibratable component (102) to detect a vibration situation of the vibratable component (102) at the second detection position (312), the second detection position (312) being located at the "S-shaped" vibration mode first maximum vibration displacement position (212, 222); and
third position detection devices (305, 306), the third position detection devices (305, 306) being arranged at a third detection position (313) of the vibratable component (102) to detect a vibration situation of the vibratable component (102) at the third detection position (313), the third detection position (313) being located at the "S-shaped" vibration mode second maximum vibration displacement position (213, 223).

13. The vibration frequency adjustment system according to claim 12, **characterized in that**
the first position detection devices (301, 302) comprise a first direction first sensor (301) and a second direction first sensor (302);
the second position detection devices (303, 304) comprise a first direction second sensor (303) and a second direction second sensor (304);
the third position detection devices (305, 306) comprise a first direction third sensor (305) and a second direction third sensor (306); and
the controller (307) is configured to:
on the basis of a detection of the first direction first sensor (301) of the first position detection devices (301, 302), determine a vibration displacement Y1 of the vibratable component (102) at the first detection position (311) and in a first direction;
on the basis of a detection of the second direction first sensor (302) of the first position detection devices (301, 302), determine a vibration displacement Z1 of the vibratable component (102) at the first detection position (311) and in a second direction;
on the basis of a detection of the first direction second sensor (303) of the second position detection devices (303, 304), determine a vibration displacement Y2 of the vibratable component (102) at the second detection position (312) and in the first direction;
on the basis of a detection of the second direction second sensor (304) of the second position detection devices (303, 304), determine a vibration displacement Z2 of the vibratable component (102) at the second detection position (312) and in the second direction;
on the basis of a detection of the first direction third sensor (305) of the third position detection devices (305, 306), determine a vibration displacement Y3 of the vibratable component (102) at the third detection position (313) and in the first direction; and
on the basis of a detection of the second direction third sensor (306) of the third position detection devices (305, 306), determine a vibration displacement Z3 of the vibratable component (102) at the third detection position (313) and in the second direction.

14. The vibration frequency adjustment system according to claim 13, **characterized in that**
(1) when the controller (307) determines that Z2<Y2, Z1<Y1, Z3<Y3, both Y2 and Y3 are less than a predetermined vibration displacement value, and Y1 is greater than the predetermined vibration displacement value, the controller (307) determines that the vibratable component (102) vibrates in the "C-shaped" vibration mode; or
(2) when the controller (307) determines that:
(i) Y2<Z2, Y1<Z1, Y3<Z3, Z1<Z2, Z1<Z3, and both Z2 and Z3 are greater than the predetermined vibration displacement value, or
(ii) Y2>Z2, Y1>Z1, Y3>Z3, Y1<Y2, Y1<Y3, and both Y2 and Y3 are greater than the predetermined vibration displacement value,
the controller (307) determines that the vibratable component (102) vibrates in the "S-shaped" vibration mode.

15. The vibration frequency adjustment system according to claim 12, **characterized in that** the detection devices (301, 302, 303, 304, 305, 306) are one-way displacement sensors or one-way acceleration sensors.

16. The vibration frequency adjustment system according to claim 1, **characterized in that** the at least one counterweight (401, 402) is of an annular structure (403, 405), an inner side of the annular structure is provided with rolling devices (414), the rolling devices (414) are rollers or balls, and the rolling devices are capable of rolling on a surface of the vibratable component (102).

17. The vibration frequency adjustment system according to claim 16, **characterized in that** the annular structure (403, 405) is an eccentric ring.

18. The vibration frequency adjustment system according to claim 16, **characterized in that** the inner side of the annular structure is provided with three rolling devices (414) that are uniformly distributed.

19. The vibration frequency adjustment system according to claim 4, **characterized in that** the at least one drive device (407, 408) is a pneumatic or hydraulic actuating element, the at least one drive device (407) comprises a cylinder body (409, 411) and a push rod (410, 412), one end of the push rod (410, 412) is fixed in the cylinder body (409, 411) in a retractable manner, and the other end of the push rod (410, 412) is connected to the corresponding one of the at least one counterweight (401, 402).

20. The vibration frequency adjustment system according to claim 1, **characterized in that** the vibration source (101) is a variable-frequency screw compressor, and the vibratable component (102) is an exhaust pipe connected to an exhaust port of the variable-frequency screw compressor.
